# EUROPÄISCHE PATENTANMELDUNG

(11) **EP 0 816 411 A1**
(43) Veröffentlichungstag der Anmeldung: **07.01.1998**
(21) Anmeldenummer: 97107512.2
(22) Anmeldetag: 07.05.1997
(51) Int. Cl.: C08G 18/80, C08G 18/72, C08G 18/79, C08G 18/78, C09D 175/04, C09D 5/03

(54) **Blockierte Polyisocyanate, ein Verfahren zu ihrer Herstellung sowie deren Verwendung**

(30) Priorität: 04.07.1996 DE 19626886
(71) Anmelder: HÜLS AKTIENGESELLSCHAFT, 45764 Marl (DE)
(72) Erfinder: Gras, Rainer, Dr., 44879 Bochum (DE)

(57) **Zusammenfassung**

Partiell oder total blockierte Polyisocyanate enthaltend physikalische Gemische einzelner
a) urethangruppenhaltiger und/oder
b) biuretgruppenhaltiger und/oder
c) isocyanuratgruppenhaltiger
aliphatischer und (cyclo)aliphatischer und/oder cycloaliphatischer Diisocyanate, deren Isocyanatgruppen so blockiert werden, daß auf ein Isocyanat-Äquivalent 0,5 bis 1 mol, vorzugsweise 0,8 bis 1 mol, 1.2.4-Triazol kommen.

## Beschreibung

Die vorliegende Erfindung betrifft neue partiell oder total blockierte Polyisocyanate mit hohem latenten Isocyanatgehalt und hoher Reaktivität, ein Verfahren zu ihrer Herstellung sowie deren Verwendung zur Herstellung von Polyurethan(PUR)-Kunststoffen, insbesondere von hitzehärtbaren PUR-Lacksystemen, ganz besonders bevorzugt von bei niederen Temperaturen härtbaren PUR-Pulverlacken und die danach hergestellten Beschichtungen.

In der Hitze härtbare PUR-Pulverlacke auf Basis von partiell oder total blockierten Polyisocyanaten und hydroxylgruppenhaltigen Polymeren, deren Erweichungspunkt oberhalb 40 °C liegt, gehören zum Stand der Technik und werden in der Literatur vielfach beschrieben, wie in den DE-OSS 21 05 777, 25 42 191, 27 35 497 ( 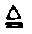 USP 4 246 380), 28 42 641, 30 04 876, 30 39 824 oder 31 28 743.

PUR-Pulverlacke bestehen im wesentlichen aus einer hydroxylgruppenaufweisenden Komponente und einem Polyisocyanat, dessen NCO-Gruppen mit einem Blockierungsmittel teilweise oder vollständig maskiert sind, so daß die OH/NCO-Polyadditionsreaktion bei Temperaturen unterhalb 140 °C nicht einsetzen kann. Erst nach dem Erhitzen auf ≥ 150 °C lassen sich derartige PUR-Pulverlacke in praxisrelevanter Zeit unter Respaltung des Blockierungsmittels und Umsetzung der OH- mit den NCO-Gruppen zu einem Lackfilm vernetzen.

Aus der Vielzahl der Blockierungsmittel, beschrieben in Houben-Weyl, Methoden der organischen Chemie, Band XIV/2, 4. Auflage, Georg Thieme Verlag, Stuttgart 1963, Seiten 61 - 70, hat sich technisch lediglich ε-Caprolactam durchgesetzt, wenn der Einsatz der blockierten Polyisocyanate auf dem PUR-Pulverlacksektor erfolgen soll.

PUR-Pulverlacke auf Basis ε-Caprolactam-blockierter Polyisocyanate erfordern für die Vernetzung der Beschichtung Härtungstemperaturen zwischen 170 und 200 °C.

So besteht großes Interesse, die hohen Härtungstemperaturen zu senken, um temperaturempfindliche Werkstücke der Pulvertechnologie zugänglich zu machen. Ebenfalls von Interesse ist die Senkung der Härtungszeiten, um die Produktionszahlen - Stückzahlen - erhöhen zu können. Es sind also neben ökologischen auch ökonomische Aspekte von Bedeutung. Man versucht dies durch den Einsatz von oximblockierten (cyclo)aliphatischen Polyisocyanaten zu erreichen. So werden z. B. oximblockierte Polyisocyanate und ihre Verwendung in PUR-Pulverlacken in der DE-OS 22 00 342, EP-OS 0 432 257, USP 38 57 818 beschrieben. In der EP-PS 0 401 343 werden PUR-Pulver beschrieben, die als Härterkomponente ein acetonoximblockiertes Trimethylolpropan-Tetramethylxylylendiisocyanat enthalten. In der EP-PS 0 409 745 werden als PUR-Pulverhärter 2.4-Dimethyl-3-pentanonoxim- bzw. 2.6-Dimethyl-4-heptanonoximblockierte Isocyanurate des Isophorondiisocyanats (IPDI), Methylen-bis-4.4'-cyclohexylisocyanats und des m- und p-Tetramethylxylylendiisocyanats genannt.

Gegenstand der EP-PS 0 531 862 ist ein Verfahren zur Herstellung von Pulverlacken mit einer Glasübergangstemperatur von 20 - 80 °C durch Vermischen von A) einer Polyolkomponente, B) eines ketoximblockierten Polyisocyanats, C) einer Katalysatorkomponente, bestehend aus mindestens einem Katalysator für die Reaktion zwischen blockierten NCO- und Hydroxylgruppen und ggf. D) weiteren aus der Pulverlacktechnologie bekannten Hilfs- und Zusatzmitteln, wobei man zur Herstellung der Pulverlacke die Komponenten A, B, C und ggf D in einem inerten Lösungsmittel oder Lösungsmittelgemisch mit einem zwischen 50 und 150 °C liegenden Siedepunkt oder -bereich homogen löst, dann die dabei resultierende Lösung vom Lösungsmittel befreit.

Mit oximblockierten Polyisocyanaten können in der Tat PUR-Pulverlacke hergestellt werden, deren Härtungstemperaturen auf niedrigerem Niveau liegen. Es ist allerdings zwischen transparenten und pigmentierten Beschichtungen zu unterscheiden. Nachteilig wirkt sich die relativ hohe Thermoinstabilität derartiger PUR-Pulverlacke aus; die Beschichtungen neigen zur Vergilbung. Weiterhin nachteilig ist die hohe Anfälligkeit zur Nadelstich- bis zur Schaumbildung, so daß oximblockiertes Polyisocyanat enthaltende PUR-Pulverlacke eingeschränkt verwendbar sind und lediglich zur Dünnschichtlackierung eingesetzt werden können.

In der DE-OS 28 12 252 werden 1.2.4-Triazol-blockierte Polyisocyanate beschrieben, die in PUR-Pulverlacken eingesetzt werden: "sie verbessern überraschenderweise weiter die Pulverlackbindemittel des Standes der Technik". Es handelt sich dabei um 1.2.4-Triazol-blockierte Diisocyanate und/oder deren urethangruppentragende Polyisocyanate.

In der DE-OS 30 33 860 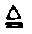 EP 0 047 452 wird von Seite 2, Zeile 29 bis Seite 3, Zeile 6 beschrieben, daß das blockierte Isocyanato-Isocyanurat des Hexamethylendiisocyanats (HDI) nicht für den PUR-Pulverlackeinsatz geeignet ist. Eine Ausnahme bildet das blockierte Isocyanato-Isocyanurat des Isophorondiisocyanats (IPDI). Wie in der EP 0 047 452 weiterhin gezeigt wird, lassen sich durch Mischtrimerisierung dieser beiden Polyisocyanate (HDI/IPDI) Produkte herstellen, die in ihrer blockierten Form, vgl. Seite 8, Zeilen 16 -21, für den PUR-Pulverlacksektor - wenn auch nicht experimentell belegt - geeignet sind. Es wird auf die Variabilität des Schmelzbereiches als Funktion der eingesetzten HDI/IPDI-Molverhältnisse verwiesen; erhöhte Lösemittelverträglichkeit, Kälteflexibilität usw., vgl. Seite 3, Zeilen 19 - 21, werden genannt.

In der DE-OS 33 22 718 werden blockierte Isocyanato-Isocyanurate des 2-Methylpentamethylendiisocyanats/2-Ethylbutylendiisocyanats und IPDI-Mischtrimerisate oder Gemische beschrieben. HDI/IPDI-Mischtrimerisate oder deren Gemische fungieren lediglich zum Vergleich.

Die Aufgabe der vorliegenden Erfindung ist es daher, die Nachteile des Standes der Technik zu beheben und mit der Bereitstellung neuer partiell oder total blockierter Polyisocyanate, die die Herstellung von PUR-Pulverlacken, transparent wie pigmentiert, gestatten, die sich durch hohe Reaktivität, d. h. Härtung bei niederen Temperaturen, auszeichnen und damit nadelstich- und vergilbungsfreie - trotz hoher Netzwerkdichte flexible Beschichtungen - in praxisrelevanten Schichtstärken zugänglich machen.

Die Aufgabe wurde durch die Lehre der Patentansprüche gelöst.

Gegenstand der vorliegenden Erfindung sind somit partiell oder total blockierte Polyisocyanate enthaltend physikalische Gemische einzelner
a) urethangruppenhaltiger und/oder
b) biuretgruppenhaltiger und/oder
c) isocyanuratgruppenhaltiger
aliphatischer und (cyclo)aliphatischer und/oder cycloaliphatischer Diisocyanate, deren Isocyanatgruppen so blockiert werden, daß auf ein NCO-Äquivalent 0,5 bis 1 mol, vorzugsweise 0,8 bis 1 mol 1.2.4-Triazol kommen.

Die erfindungsgemäß eingesetzten Polyisocyanate sind physikalische Gemische einzelner Urethane, Biurete und Isocyanurate, die in den genannten Verhältnissen eingesetzt werden.

Als Polyisocyanate im Sinne dieser Anmeldung sind insbesondere Diisocyanate aliphatischer und (cyclo)aliphatischer und/oder cycloaliphatischer Struktur anzusehen. Statt einzelne Vertreter hier aufzuführen, wird auf die Literatur verwiesen: Houben-Weyl, Methoden der organischen Chemie, Band 14/2, S. 61 ff und J. Liebigs Annalen der Chemie, Band 562, S. 75 - 136. Bevorzugt werden in der Regel die technisch leicht zugänglichen aliphatischen - wie Hexamethylendiisocyanat - die (cyclo)aliphatischen - wie Isophorondiisocyanat (IPDI) - sowie die cycloaliphatischen Diisocyanate - wie 4.4'-Diisocyanatodicyclohexylmethan (HMDI) - eingesetzt.

Die erfindungsgemäßen physikalischen Mischungen bestehen immer aus einer aliphatischen Isocyanatkomponente und mindestens einem Vertreter aus der Gruppe der (cyclo)aliphatischen und cycloaliphatischen Isocyanatkomponente. Unter (cyclo)aliphatischen Diisocyanaten mit gleichzeitig aliphatisch und cycloaliphatisch gebundenen Isocyanatgruppen zählt z. B. IPDI. Demgegenüber versteht man unter cycloaliphatischen Diisocyanaten solche, die nur direkt am cycloaliphatischen Ring gebundene Isocyanatgruppen tragen. Das Verhältnis aliphatischer zu (cyclo)aliphatischer und/oder cycloaliphatischer Diisocyanate variiert von 90 zu 10 bis 10 zu 90 Gew.-%, vorzugsweise von 75 zu 25 bis 25 zu 75 Gew.-%, insbesondere von 60 zu 40 bis 40 zu 60 Gew.-%.

Die Herstellung der Trimerisate erfolgte in bekannter Weise nach den Angaben der GB-PS 1 391 066, DE-OSS 23 25 826, 26 44 684 oder 29 16 201.

Die Herstellung der Biurete erfolgte ebenfalls in bekannter Weise nach den Angaben der DE-OSS 23 08 015, 24 37 130 und 30 07 679.

Schließlich sind als Polyisocyanate im Sinne der vorliegenden Erfindung auch solche Addukte zu verstehen, die durch Umsetzung der obengenannten monomeren, uberwiegend bifunktionellen Polyisocyanate mit den in der Isocyanatchemie gebräuchlichen Kettenverlängerungsmitteln erhalten werden. Derartige Verbindungen werden beispielsweise in der DE-OS 27 07 660 aufgeführt. Bevorzugt werden Polyole, deren Molekulargewicht unter 350 liegt, insbesondere Ethylenglykol (E) und Trimethylolpropan (TMP). Die Kettenverlängerungsmittel sollten nur in solchen Mengen mit den Polyisocyanaten umgesetzt werden, daß das resultierende Addukt im Durchschnitt mindestens zwei Isocyanatgruppen aufweist.

Die erfindungsgemäßen physikalischen Mischungen bestehen immer aus einer aliphatischen urethan- und/oder biuret- und/oder isocyanuratgruppenhaltigen Isocyanatkomponente und mindestens einem Vertreter aus der Gruppe (cyclo)aliphatischer urethan- und/oder isocyanuratgruppenhaltiger Isocyanatkomponente und/oder einem Vertreter aus der Gruppe cycloaliphalischer urethan- und/oder isocyanuratgruppenhaltiger Isocyanatkomponente

Aus der Vielzahl der erfindungsgemäß herstellbaren physikalischen Mischungen sind die reinen Isocyanuratgemische nicht Gegenstand dieser Erfindung.

Die Verfahrensprodukte bestehen somit aus Urethanen und/oder Biureten und/oder Isocyanuraten mit gegebenenfalls höheren Oligomeren und einem NCO-Gehalt von 8 bis 22 Gew.-%, vorzugsweise von 10 bis 21,5 Gew.-%, der durch Blockieren mit 1.2.4-Triazol auf einen freien NCO-Gehalt von ≤ 5 Gew.-%, vorzugsweise ≤ 3 Gew.-%, insbesondere ≤ 2 Gew-%, herabgesetzt wird.

Das NCO-Gruppen-/Blockierungsverhältnis liegt erfindungsgemäß bei 1:0,5 bis 1, vorzugsweise 1:0,8 bis 1.

Der latente NCO-Gehalt der 1.2.4-Triazol-blockierten Polyisocyanate beträgt erfindungsgemäß 7 - 18 Gew.-%, vorzugsweise 10 - 16 Gew.-%.

Die erfindungsgemäße Herstellung der partiell oder total blockierten physikalischen Mischungen (Polyisocyanate) kann sowohl in Lösemitteln als auch in Substanz - diskontinuierlich im Reaktor oder kontinuierlich im statischen Mischer bzw. vorteilhaft im Mehrwellenkneter, insbesondere Zweischneckenextruder - erfolgen.

Als Lösemittel kommen nur solche in Frage, die mit den Polyisocyanaten nicht reagieren, beispielsweise Ketone wie Aceton, Methyl ethylketon, Methylisobutylketon, Cyclopentanon, Cyclohexanon, Aromaten wie Toluol, Xylol, Chlorbenzol, Nitrobenzol; cyclische Ether wie Tetrahydrofuran; Ester wie Methylacetat, n-Butylacetat, aliphatische Chlorkohlenwasserstoffe wie Chloroform, Tetrachlorkohlenstoff; aprotische Lösungsmittel wie Dimethylformamid, Dimethylacetamid, Dimethylsulfoxid sowie Lösemittel, die für lösemittelhaltige PUR-Lacksysteme üblicherweise verwendet werden.

Die Umsetzung des Polyisocyanats mit dem 1.2.4-Triazol wird üblicherweise im Temperaturbereich zwischen 0 und 150 °C durchgeführt. Um die Blockierung schnell und vollständig durchzuführen, werden höhere Reaktionstemperaturen bevorzugt. Andererseits muß die Reaktionstemperatur um mindestens 10 °C unter der Abspalttemperatur des blockierten Polyisocyanats liegen. Bevorzugt wird der Temperaturbereich, der um 15 bis 25 °C unter der Abspalttemperatur liegt, d. h. etwa bei 115 bis 120 °C.

Bei der Blockierungsreaktion können Katalysatoren, die die Isocyanat-Polyaddition begünstigen, wie z. B. Zinn-II-octoat, Dibutylzinndilaurat (DBTL), tertiäre Amine u. a., zugegen sein.

Ein weiterer Gegenstand der vorliegenden Erfindung ist die Verwendung der erfindungsgemäßen Verbindungen zur Herstellung von PUR-Kunststoffen, insbesondere von hitzehärtbaren, lösemittelhaltigen Einkomponenten-PUR-Lacksystemen, ganz bevorzugt von bei niederen Temperaturen härtbaren PUR-Pulverlacken und die danach hergestellten Beschichtungen.

Ein weiterer Gegenstand der Erfindung ist die Verwendung der Stoffgemische als Pulverlacke bzw. als Bindemittel für Pulverlacke zum Beschichten beliebiger hitzehärtbarer Substrate, insbesondere von hitzeempfindlichen Werkstücken, nach an sich bekannten, für die Verarbeitung von Pulverlacken geeigneten Beschichtungsmethoden. Die transparenten PUR-Pulverlacke eignen sich vor allem aufgrund der hohen Reaktivität - niedrige Härtungstemperaturen - und des ausgezeichneten Verlaufs als Topcoat, insbesondere als Automobil-Decklack.

Derartige Pulverlacke stellen ein Stoffgemisch aus erfindungsgemäß blockierten Polyisocyanaten, einem Hydroxylgruppen enthaltenden Polymeren und gegebenenfalls üblichen Hilfs- und Zusatzstoffen dar.

Als hydroxylgruppenhaltige Polymere kommen insbesondere Polyester, Epoxidharze sowie hydroxylgruppenhaltige Acrylate mit einem Molekulargewicht von 800 bis 40 000 in Betracht.

Für die Herstellung der Pulverlacke eignen sich bevorzugt die Polyester der Terephthalsäure mit den Alkoholen Hexandiol-1.6 (HD), Neopentylglykol (NPG), 1.4-Dimethanolcyclohexan (DMC) und 2.2.2-Trimethylolpropan.

Die einsetzbaren Epoxidharze sind in der DE-OS 29 45 113, Seite 12, Zeile 1 bis Seite 13, Zeile 26 aufgeführt.

Geeignete Polyacrylatharze werden in der DE-OS 30 30 539, Seite 14, Zeile 21 bis Seite 15, Zeile 26 beschrieben.

Das Mischungsverhältnis läßt sich in weiten Grenzen variieren. Die besten lacktechnischen Kenndaten werden erhalten, wenn das Bindemittelverhältnis aus 9 - 45 Gew.-% Vernetzer und 55 - 91 Gew.-% Polyester besteht, wobei das OH/NCO-Verhältnis von 1:0,6 - 1:1,2 vorzugsweise 1:0,9 - 1:1,1, eingestellt werden kann. Besonders empfehlenswert ist, pro OH-Äquivalent der Polyhydroxylverbindung ein Äquivalent NCO des Vernetzers einzusetzen.

Um die Geliergeschwindigkeit der hitzehärtbaren Pulverlacke zu erhöhen, kann man Katalysatoren zusetzen. Als Katalysatoren verwendet man Organozinnverbindungen wie Dibutylzinndilaurat, Sn(II)-octoat, Dibutylzinnmaleat usw. Die Menge an zugesetztem Katalysator beträgt 0,1 - 5 Gew.-T. auf 100 Gew.-T. des Hydroxylgruppen tragenden Polyesters.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten wie beheizbaren Knetern, vorzugsweise jedoch durch Extrudieren, erfolgen, wobei eine Temperaturobergrenze von 120 °C nicht überschritten werden sollte. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, z. B. elektrostatisches Pulversprühen, Wirbelsintern, elektrostatisches Wirbelsintern erfolgen. Nach dem Pulverauftrag werden die beschichteten Werkstücke zur Aushärtung zwischen 60 und 4 Minuten auf eine Temperatur von 130 bis 200 °C, vorzugsweise 25 und 5 Minuten bei 140 bis 180 °C, gebracht.

Zur Beschichtung mit den erfindungsgemäßen pulverförmigen Überzugsmitteln eignen sich alle Substrate, die die angegebenen Härtungsbedingungen ohne Einbuße der mechanischen Eigenschaften vertragen, z. B. Metalle, Glas, Keramik, Kunststoff oder Holz.

Die erhaltenen PUR-Pulverlacke zeichnen sich gegenüber den bekannten durch ein verbessertes Verhalten gegenüber Hitze, UV und chemischen Einflüssen aus; die transparenten Beschichtungen weisen insbesondere einen ausgezeichneten Verlauf auf.

### Experimenteller Teil

### A. Herstellung der 1.2.4-Triazol-blockierten urethan- und/oder biuret- und/oder isocyanuratgruppenhaltigen Polyisocyanate

### Allgemeine Herstellungsvorschrift

Die gemäß Tabelle 1 eingesetzten physikalischen Mischungen wurden bei 100 - 120 °C im doppelwandigen Reaktor homogenisiert. Vor der 1.2.4-Triazolzugabe wird der NCO-Gehalt der Schmelze titrimetrisch überprüft und anschließend die berechnete Menge 1.2.4-Triazol portionsweise so zugesetzt, daß die Reaktionstemperatur 130 °C nicht übersteigt. Nach der 1.2.4-Triazolzugabe wird das Reaktionsprodukt noch so lange bei 120 °C gerührt, bis der NCO-Gehalt unter den berechneten Wert bzw. < 0,5 Gew.-% gesunken ist.

Wird ggf. Dibutylzinndilaurat (DBTL) zur Reaktionsbeschleunigung benötigt, erfolgt die Zugabe nach der Isocyanat-Homogenisierung bzw. vor der Blockierungsmittelzugabe.

### Eingesetzt wurden die technisch zugänglichen

a) Isocyanurate z. B. der
A) Hüls AG
   VESTANAT T 1890 NCO-Gehalt: 17,3 ± 0,3
B) Bayer AG
   DESMODUR N 3300 NCO-Gehalt: 21,8 ± 0,3
C) das Laborprodukt W 1600 aus 4.4'-Diisocyanatodicyclohexylmethan (HMDI) NCO-Gehalt: 12,6 ± 0,3

b) das Biuret, z. B. der
D) Bayer AG
   DESMODUR N 3200 NCO-Gehalt:

c) die urethangruppenhaltigen Polyisocyanate, bestehend aus:

| Bezeichnung | Diisocyanat [mol] | OH-Komponente [mol] | NCO [%] |
|---|---|---|---|
| E | 2 IPDI | E | 16,1 ± 0,3 |
| F | 3 IPDI | TMP | 15,2 ± 0,3 |
| G | 2 HMDI | E | 13,7 ± 0,3 |
| H | 3 HMDI | TMP | 13,0 ± 0,3 |

Die Herstellung erfolgte nach bekannten Methoden der PUR-Chemie

**Tabelle 1**

| **1.2.4-Triazol-blockierte Isocyanatgemische** | | | | | | | | | | |
|---|---|---|---|---|---|---|---|---|---|---|
| Beispiel A | Zusammensetzung [Gew.%] | | | | | | Chemische und physikalische Kenndaten | | | |
| | | | | | | | NCO-Gehalt [Gew.-%] | | Schmelzbereich [°C] | Glasumwandlungstemperatur [°C] |
| | Polyisocyanate | | | | | | frei | gesamt | | |
| | Bezeichnung | | | NCO [%] | Menge | 1.2.4-Triazol | | | | |
| 1 | A | D | - | 18,2 | 77,0 | 23,0 | 0,5 | 13,9 | 104 -107 | 74 -90 |
| 2 | A | D | - | 19,2 | 76,0 | 24,0 | 0,4 | 14,3 | 83 -89 | 49 -59 |
| 3 | A | D | - | 19,2 | 77,9 | 22,1 | 1,7 | 14,9 | 77 -80 | 47 -62 |
| 4 | A | D | - | 19,7 | 75,5 | 24,5 | 0,6 | 14,7 | 68 -71 | 44 -58 |
| 5 | C | D | - | 14,2 | 81,1 | 18,9 | 0,4 | 11,3 | 93 -97 | 57 -69 |
| 6 | C | D | - | 16,2 | 79,0 | 21,0 | 0,5 | 12,4 | 75 -77 | 44 -57 |
| 7 | E | B | - | 17,5 | 77,6 | 22,4 | 0,5 | 13,1 | 94 -97 | 58 -69 |
| 8 | E | B | - | 19,0 | 76,2 | 23,8 | 0,6 | 14,2 | 62 -65 | 22 -34 |
| 9 | F | B | - | 17,4 | 77,7 | 22,3 | 0,5 | 13,2 | 83 -86 | 48 -60 |
| 10 | F | B | - | 18,6 | 76,6 | 23,4 | 0,6 | 14,0 | 65 -68 | 34 -54 |
| 11 | E | D | - | 17,7 | 77,5 | 22,5 | 0,6 | 13,6 | 81 -84 | 45 -62 |
| 12 | E | D | - | 17,7 | 80,9 | 19,1 | 2,3 | 14,0 | 81 -84 | 47 -59 |
| 13 | F | D | - | 17,6 | 77,5 | 22,5 | 0,6 | 13,3 | 79 -82 | 46 -61 |
| 14 | G | B | - | 15,6 | 74,1 | 25,9 | 0,5 | 12,0 | 72 -75 | 41 -57 |
| 15 | H | B | - | 15,1 | 80,1 | 19,9 | 0,5 | 11,9 | 77 -80 | 37 -54 |
| 16 | H | B | - | 14,2 | 82,9 | 17,1 | 1,4 | 11,5 | 71 -76 | 33 -52 |
| 17 | G | D | - | 15,0 | 80,3 | 19,7 | 0,4 | 11,7 | 81 -83 | 44 -59 |
| 18 | G | D | - | 15,7 | 79,4 | 20,6 | 0,5 | 12,1 | 66 -70 | 36 -51 |
| 19 | H | D | - | 15,2 | 79,9 | 20,1 | 0,5 | 11,9 | 72 -76 | 40 -57 |
| 20 | A | B | E | 18,7 | 76,5 | 23,5 | 0,4 | 14,0 | 85 -90 | 48 -61 |
| 21 | A | B | F | 19,3 | 75,9 | 24,1 | 0,4 | 14,1 | 88 -94 | 52 -66 |
| 22 | A | D | F | 18,7 | 76,5 | 23,5 | 0,6 | 13,9 | 80 -84 | 45 -58 |
| 23 | A | B | H | 17,8 | 77,3 | 22,7 | 0,5 | 13,6 | 86 -91 | 51 -64 |
| 24 | A | D | H | 17,9 | 77,2 | 22,8 | 0,4 | 13,8 | 90 -93 | 52 -68 |
| 25 | B | F | G | 17,1 | 78,1 | 21,9 | 0,5 | 13,0 | 73 -77 | 42 -58 |
| 26 | D | E | H | 17,0 | 78,1 | 21,9 | 0,5 | 13,1 | 70 -74 | 39 -55 |

### B Polyolkomponente

### Allgemeine Herstellungsvorschrift

Die Ausgangskomponenten - Terephthalsäure (TS), Dimethylterephthalat (DMT), Hexandiol-1.6 (HD), Neopentylglykol (NPG), 1.4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,5 Gew.-% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1,33 mbar) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Tabelle 2 gibt Polyesterzusammensetzungen und Polyester des Marktes mit den entsprechenden physikalischen und chemischen Kenndaten wieder.

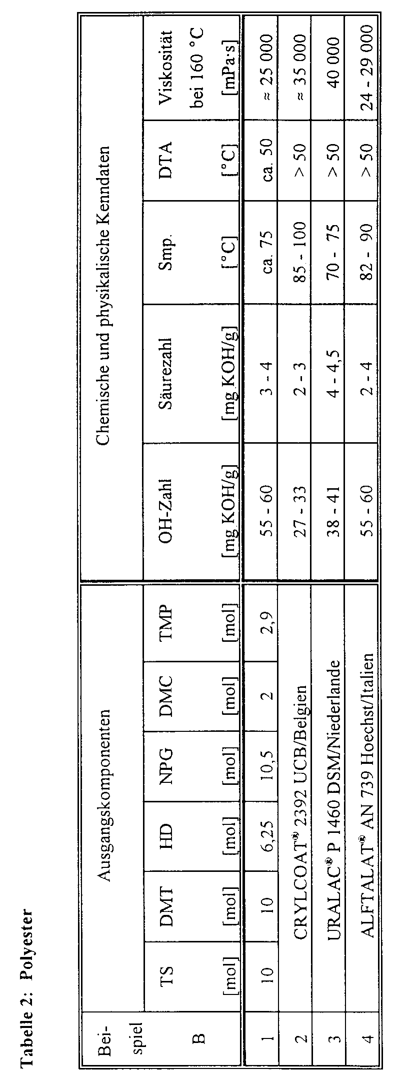

### C Polyurethan-Pulverlacke

### Allgemeine Herstellungsvorschrift

Die zerkleinerten Produkte - blockierte Polyisocyanate (Vernetzer), Polyester, Verlaufsmittel-, ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umluftrockenschrank bei Temperaturen zwischen 140 und 180 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:
- SD: = Schichtdicke in µm
- ET: = Tiefung nach Erichsen in mm (DIN 53 156)
- GS: = Gitterschnittprüfung (DIN 53 151)
- GG 60 °∢: = Messung des Glanzes nach Gardner (ASTM-D 5233)
- Imp. rev.: = Impact reverse in g·m
- HK: = Härte nach König in sec (DIN 53 157)

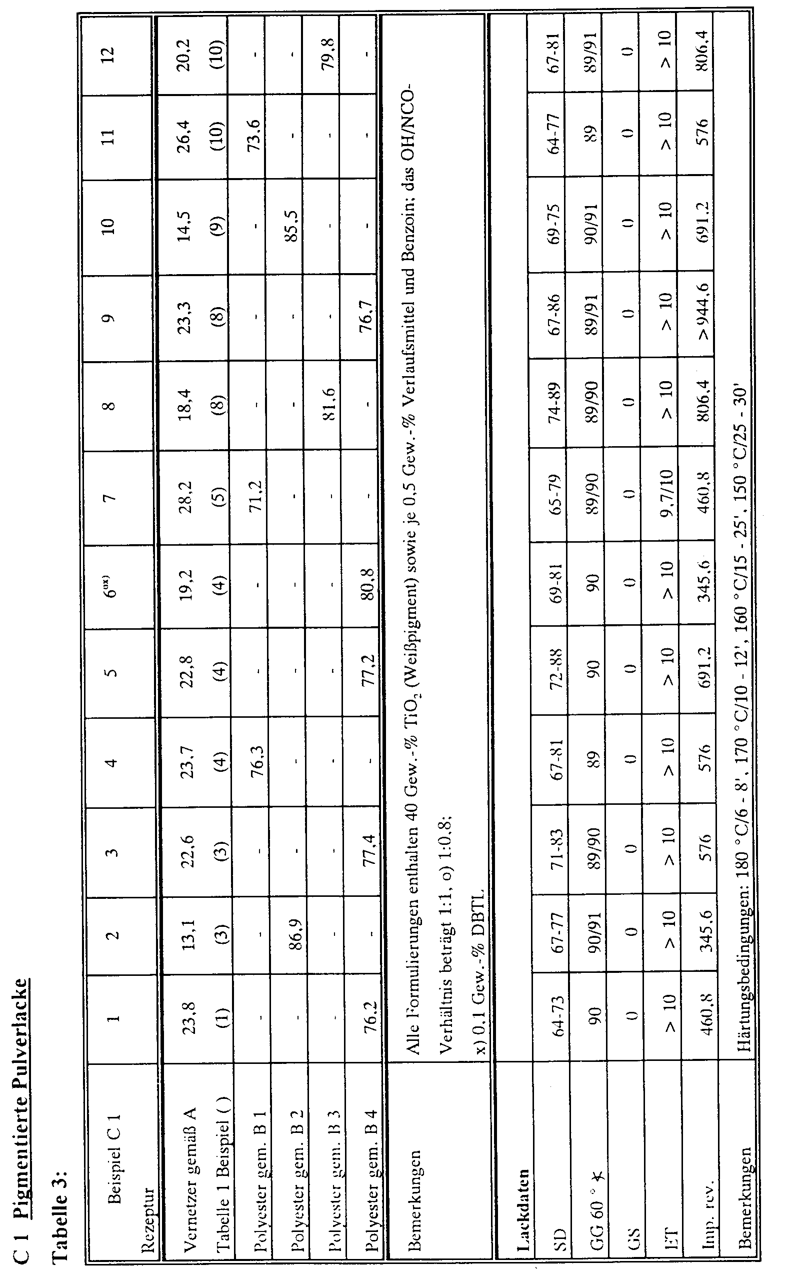

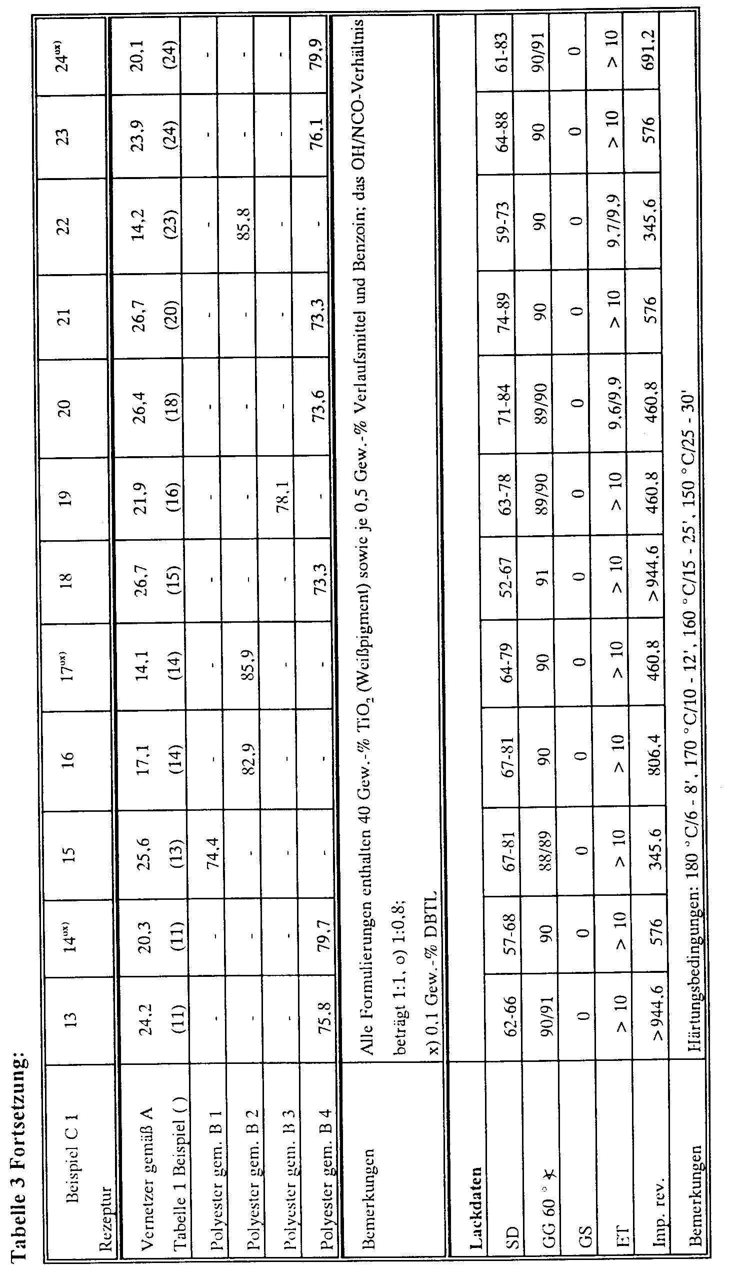

### C 2 Transparente Pulverlacke

Nach dem beschriebenen Verfahren wurden auch die transparenten Pulverlacke hergestellt, appliziert und zwischen 180 und 140 °C eingebrannt.

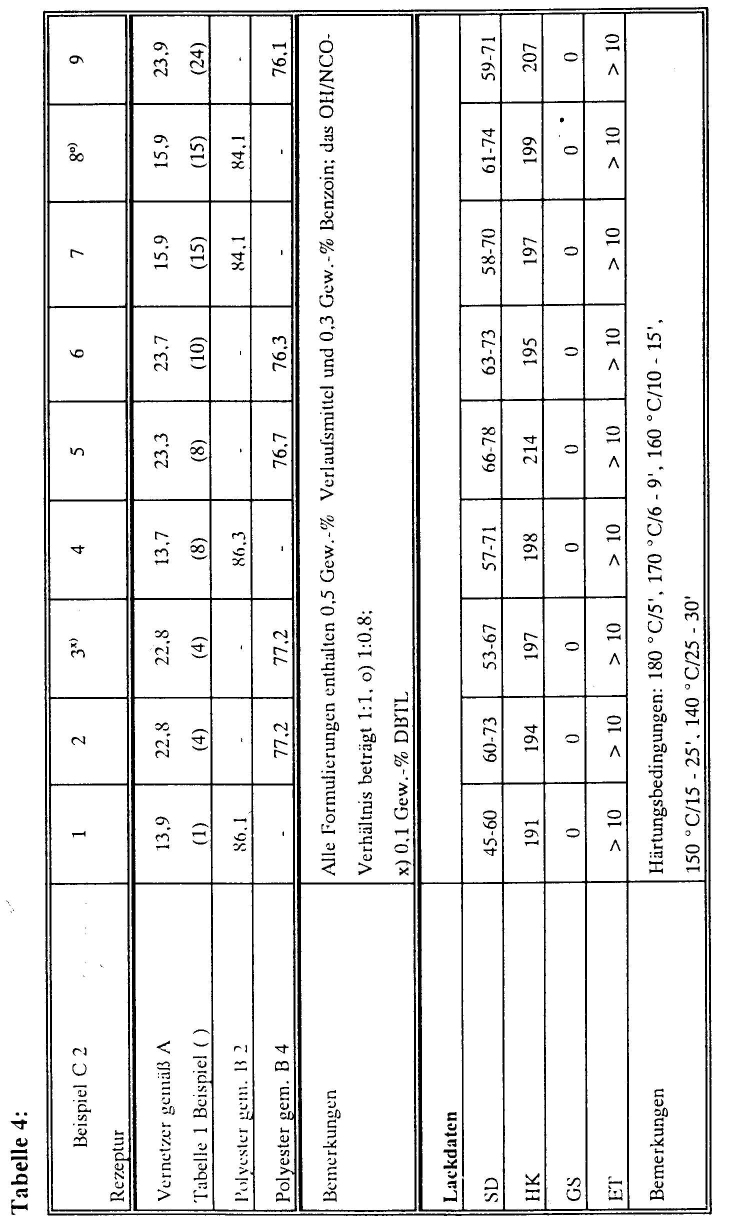

## Patentansprüche

1. Partiell oder total blockierte Polyisocyanate enthaltend physikalische Gemische einzelner
a) urethangruppenhaltiger und/oder
b) biuretgruppenhaltiger und/oder
c) isocyanuratgruppenhaltiger
aliphatischer und (cyclo)aliphatischer und/oder cycloaliphatischer Diisocyanate, deren Isocyanatgruppen so blockiert werden, daß auf ein Isocyanat-Äquivalent 0,5 bis 1 mol, vorzugsweise 0,8 bis 1 mol, 1.2.4-Triazol kommen.

2. Partiell oder total blockierte Polyisocyanate gemäß Anspruch 1,
dadurch gekennzeichnet,
daß als Diisocyanate Hexamethylendiisocyanat, Isophorond isocyanat und 4.4'-Diisocyanatodicyclohexylmethan eingesetzt werden.

3. Partiell oder total blockierte Polyisocyanate nach den Ansprüchen 1 und 2,
dadurch gekennzeichnet,
daß das Verhältnis aliphatischer zu (cyclo)aliphatischer und/oder cycloaliphatischer Diisocyanate von 90 zu 10 bis 10 zu 90 Gew.-%, vorzugsweise von 75 zu 25 bis 25 zu 75 Gew.-%, insbesondere von 60 zu 40 bis 40 zu 60 Gew.-%, variiert.

4. Partiell oder total blockierte Polyisocyanate nach den Ansprüchen 1 bis 3,
dadurch gekennzeichnet,
daß sie mit üblichen linearen und verzweigten Polyolen kettenverlängert sind.

5. Partiell oder total blockierte Polyisocyanate nach den Ansprüchen 1 bis 4,
dadurch gekennzeichnet,
daß als Kettenverlängerer Ethylenglykol und Trimethylolpropan eingesetzt werden.

6. Partiell oder total blockierte Polyisocyanate nach den Ansprüchen 1 bis 5,
dadurch gekennzeichnet,
daß die physikalischen Gemische einen Isocyanatgehalt von 8 bis 22 Gew.-%, vorzugsweise 10 bis 21,5 Gew.-%, aufweisen.

7. Partiell oder total blockierte Polyisocyanate nach den Ansprüchen 1 bis 6,
dadurch gekennzeichnet,
daß der latente Isocyanatgehalt von 7 - 18 Gew.-%, vorzugsweise 10 - 16 Gew.-%, und der freie Isocyanatgehalt ≤ 5 Gew.-%, vorzugsweise ≤ 3 Gew.-%, insbesondere ≤ 2 Gew.-%, beträgt.

8. Verfahren zur Herstellung der erfindungsgemäßen Verbindungen nach den Ansprüchen 1 bis 7,
dadurch gekennzeichnet,
daß die urethan-, biuret- und/oder isocyanuratgruppenhaltigen Polyisocyanate in dem erfindungsgemäßen Verhältnis lösemittelhaltig oder lösemittelfrei, diskontinuierlich im Reaktor oder kontinuierlich im statischen Mischer oder Mehrwellenkneter, insbesondere im Zweiwellenextruder, hergestellt werden.

9. Verfahren nach Anspruch 8,
dadurch gekennzeichnet,
daß zur Umsetzung Katalysatoren in einer Konzentration von 0,01 bis 1 Gew.-%, vorzugsweise 0,03 bis 0,5 Gew.-%, bezogen auf die eingesetzten Ausgangsstoffe, eingesetzt werden.

10. Verfahren nach den Ansprüchen 8 und 9,
dadurch gekennzeichnet,
daß als Katalysatoren organische Zinnverbindungen, bevorzugt Dibutylzinndilaurat, eingesetzt werden.

11. Verwendung der partiell oder total blockierten Polyisocyanate nach den Ansprüchen 1 bis 7 in Kombination mit hydroxylgruppenhaltigen Polymeren zur Herstellung von PUR-Kunststoffen, ins-besondere von hitzehärtbaren PUR-Lacksystemen, ganz bevorzugt von transparenten und pigmentierten PUR-Pulverlacken.

12. Transparente und pigmentierte Polyurethan-Pulverlacke,
dadurch gekennzeichnet,
daß sie partiell oder total mit 1.2.4-Triazol blockierte Polyisocyanate gemäß den Ansprüchen 1 bis 7 in Kombination mit hydroxylgruppenhaltigen Polymeren sowie weitere Zuschlags- und Hilfsstoffe enthalten.

13. Polyurethan-Pulverlacke nach Anspruch 12,
dadurch gekennzeichnet,
daß ein OH/NCO-Verhältnis 1:0,5 bis 1,2, vorzugsweise 1:0,8 bis 1,1, insbesondere 1:1, zugrunde liegt.

14. Polyurethan-Pulverlacke nach den Ansprüchen 12 und 13,
dadurch gekennzeichnet,
daß den PUR-Pulverlacken Katalysatoren zugesetzt werden in einer Konzentration von 0,03 bis 0,5 Gew.-% unter Einbeziehung der bereits enthaltenen Katalysatormenge aus den erfindungsgemäßen Polyisocyanaten.

15. Polyurethan-Pulverlacke nach den Ansprüchen 12 bis 14,
dadurch gekennzeichnet,
daß den PUR-Pulverlacken organische Zinnverbindungen als Katalysatoren zugesetzt werden.

16. Polyurethan-Pulverlacke nach den Ansprüchen 12 bis 15,
dadurch gekennzeichnet,
daß als hydroxylgruppenhaltige Polymere Polyester mit einer Funktionalität ≥ 2, einer OH-Zahl von 20 bis 200 mg KOH/g, einer Viskosität < 60 000 mPa·s bei 160 °C und einem Schmelzpunkt ≥ 70 °C und ≤ 120 °C eingesetzt werden.

17. Polyurethan-Pulverlacke nach den Ansprüchen 12 bis 16,
dadurch gekennzeichnet,
daß als hydroxylgruppenhaltige Polymere Polyester mit einer Funktionalität ≥ 2, einer OH-Zahl von 30 bis 150 mg KOH/g, einer Viskosität < 40 000 mPa·s bei 160 °C und einem Schmelzpunkt von 75 bis 100 °C eingesetzt werden.

18. Lagerstabile, in der Hitze härtbare transparente und pigmentierte PUR-Pulverlacke hoher Reaktivität aus partiell oder total mit 1.2.4-Triazol-blockierten Polyisocyanaten, einem hydroxylgruppenhaltigen Polyester sowie gegebenenfalls den in der PUR-Chemie üblichen Hilfs- und Zuschlagsstoffen zum Beschichten beliebiger Substrate, insbesondere von hitzeempfindlichen Werkstücken.

19. Verwendung der transparenten PUR-Pulverlacke gemäß Anspruch 18 als Auto-Decklack.
